# EUROPÄISCHE PATENTSCHRIFT

(11) **EP 1 992 851 B1**
(45) Veröffentlichungstag und Bekanntmachung des Hinweises auf die Patenterteilung: **12.09.2012**
(21) Anmeldenummer: 08006677.2
(22) Anmeldetag: 01.04.2008
(51) Int. Cl.: F16J 15/44

(54) **Dichtungsanordnung**
Seal arrangement
Dispositif d'étanchéité

(30) Priorität: 15.05.2007 DE 102007022995
(43) Veröffentlichungstag der Anmeldung: 19.11.2008
(73) Patentinhaber: Carl Freudenberg KG, 69469 Weinheim (DE)
(72) Erfinder: Klebes, Tobias, 67308 Biedesheim (DE); Bock, Eberhard, Dr., 69509 Mörlenbach (DE); Jäck, Thomas, 64658 Fürth (DE)

(56) Entgegenhaltungen:
- DE-A1- 2 227 374
- DE-A1- 19 713 455
- DE-A1- 19 839 297
- DE-U- 1 934 396
- US-A- 2 402 033
- US-A1- 2006 055 119

## Beschreibung

### Technisches Gebiet

Die Erfindung betrifft eine Dichtungsanordnung zur Abdichtung einer Drehdurchführung für Fluide zwischen einer Welle und einem Gehäuse, wobei die Welle zumindest eine Nut umfasst in der eine Rechteckdichtung angeordnet ist, wobei die Rechteckdichtung an zumindest einer Begrenzungsfläche eine hydrodynamische Struktur in Form zumindest einer Ausnehmung aufweist.

### Stand der Technik

Drehdurchführungen sind insbesondere aus der Getriebetechnik bekannt. Dort dienen sie der Versorgung und Steuerung rotierender Einrichtungen mit einem Fluid. Dazu weist eine innerhalb eines Gehäuses rotierende Welle eine radiale Bohrung auf, die in einem Raum mündet, der durch die Welle und das Gehäuse begrenzt ist. Das Fluid wird über das Gehäuse dem Raum zugeführt. Zur Abdichtung des Raums sind beidseitig der Bohrung Dichtungen vorgesehen. Die Dichtungen werden in Nuten geführt, die vorzugsweise in der Welle vorgesehen sind. Da das Fluid unter einem hohen Druck stehen kann und die Welle mit hohen Drehzahlen rotieren kann, ist die Dichtung einer hohen mechanischen und thermischen Belastung unterworfen. Daher werden hier meist Rechteckdichtungen aus metallischen Werkstoffen eingesetzt. Bei metallischen Rechteckdichtungen und solchen aus Hochtemperatur-Thermoplasten wird meist eine Stoßstelle vorgesehen, auch Schloss genannt, durch die die Rechteckdichtung zur Montage aufgeweitet werden kann. Diese Stoßstelle weist konstruktionsbedingt eine schlechtere Dichtwirkung auf.

Zur Verringerung der Reibung zwischen den einander berührenden Flächen, den Gleitflächen, der Dichtung und der Welle beziehungsweise dem Gehäuse ist es bekannt, die berührende Grenzfläche der Dichtung mit einer hydrodynamischen Struktur in Form von Ausnehmungen auszurüsten. Die hydrodynamische Struktur bewirkt ein Auftauen des durch die Rotation mitgeschleppten Fluids. Dadurch steigt der Schleppdruck lokal an, was eine Entlastung der Gleitflächen und eine Verringerung der Festkörperreibung bewirkt. Die Druckschrift DE 197 13 455 A1 zeigt eine Dichtungsanordnung mit einem Dichtring. Der Dichtring dient zum Abdichten einer Welle und eines Gehäuses, die sich relativ zueinander drehen, wobei der Dichtring in einer ringförmigen Ausnehmung angebracht wird, die an einer zylindrischen Außenfläche der Welle ausgebildet ist. Der Dichtring umfasst mehrere Ölausnehmungen, die an einer Seitenfläche des Dichtrings, die zur ringförmigen Ausnehmung weist, ausgebildet sind und sich zur Seite einer zylindrischen Innenfläche öffnen, und schräge Konkavabschnitte als Keilwirkungserzeugungsflächen, die sich an beiden Seiten der Ölausnehmung in Umfangsrichtung erstrecken und mit der Ölausnehmung verbunden sind.

Die Druckschrift US 2006/00 55 119 A1 zeigt einen Dichtring mit geneigten Flächen an einer Seite des Dichtrings, wobei sich eine erste geneigte Fläche zu einer inneren Umfangsfläche und einer Seitenfläche des Dichtrings öffnet. Zwischen benachbarten ersten geneigten Flächen ist eine Begrenzung vorgesehen. Die geneigte Fläche läuft an ihren Enden in Richtung der Abtrennung zwischen den geneigten Fläche konvergierend aufeinander zu.

In der Druckschrift DE 22 27 374 ist ein hydrodynamischer Dichtring mit an den Stirnseiten gleichsinnig verlaufenden Spiralrillen dargestellt.

Aus der Druckschrift US 2,402,033 sind hydrodynamische Ausnehmungen in einem Dichtring bekannt, deren Breite und Tiefe sich verjüngend ausgebildet sind.

### Darstellung der Erfindung

Der Erfindung liegt die Aufgabe zugrunde, die Dichtungsanordnung so weiterzuentwickeln, dass die Reibung der Gleitflächen nochmais reduziert ist.

Diese Aufgabe wird mit den Merkmalen von Anspruch 1 gelöst. Vorteilhafte Ausgestaltungen sind in den Unteransprüchen angeben.

Zur Lösung der Aufgabe nimmt die Breite und die Tiefe der Ausnehmung, in Strömungsrichtung des Fluids betrachtet, ab. Zwischen der Rechteckdichtung und der Nut, in der die Rechteckdichtung montiert ist ergibt sich bei Rotation eine Relativbewegung. Das in der hydrodynamischen Struktur befindliche Fluid wird dabei mitgeschleppt und staut sich in der Spitze der Ausnehmung. Die Höhe des Schleppdrucks ist abhängig von der Länge, der Breite und der Tiefe der hydrodynamischen Struktur, insbesondere in dessen Spitze. Je größer der durch die hydrodynamische Struktur bewirkte Schleppdruck ist, desto größer ist die Entlastung der Gleitflächen und desto kleiner ist damit die Reibung und die dadurch dissipierte Energie. Durch die Verjüngung in der Breite und die abnehmende Tiefe in Richtung auf die Spitze der Ausnehmung steigt der Schleppdruck ebenfalls in Richtung auf die Spitze an. Bei hohen Drehzahlen bewirkt der Schleppdruck die Trennung der Gleitflächen von Dichtung und Nut. Dabei ist die Ausnehmung vorzugsweise so ausgebildet, dass der Schleppdruck drehrichtungsunabhängig aufgebaut werden kann. Dazu kann die Ausnehmung symmetrisch ausgebildet sein und beispielsweise eine ovale Grundform aufweisen. Vorzugsweise sind mehrere derartiger Ausnehmungen über den Umfang verteilt angeordnet. Dazu können 5 bis 50 Ausnehmungen je Grenzfläche vorgesehen sein. Vorzugsweise erstrecken sich die Ausnehmungen über einige Millimeter, also im makroskopischen Bereich. Es ist jedoch auch denkbar, Ausnehmungen mit mikroskopischer Erstreckung, einigen Mikrometern vorzusehen. Hier sollten jedoch mehr als 100 Ausnehmungen vorgesehen werden.

Die hydrodynamische Struktur kann an beiden Seitenwänden der Rechteckdichtung angeordnet sein. Dadurch vereinfacht sich die Montage, da insbesondere bei drehrichtungsunabhängig ausgebildeten Strukturen die Dichtung selbst auch nicht drehrichtungsgebunden ist und beidseitig einsetzbar ist.

Eine weitere hydrodynamische Struktur kann an der Mantelfläche der Rechteckdichtung angeordnet sein. Das ist insbesondere dann vorteilhaft, wenn die Gleitpartner inkompatibel sind und eine Gleitbewegung auf der Mantelfläche erwünscht ist.

Die Ausnehmung kann keilförmig oder konisch ausgebildet sein. Derartige Ausnehmungen sind besonders einfach herstellbar und bewirken einen hohen Schleppdruck in der Spitze der Ausnehmung.

Die Tiefe und/oder die Breite der Ausnehmung können sich unter einem Winkel von 0,5 bis 10° verjüngen. In diesem Bereich erfolgt ein besonders vorteilhafter Aufbau des Schleppdrucks.

Die Rechteckdichtung kann aus einem Hochtemperatur-Thermoplast bestehen. Derartige Thermoplaste sind beispielsweise Polyetherketone (PEK, PEEK) oder Polyimide (PI, PBMI, PAI, PEI), die mit verschiedenen Füllstoffen versetzt sein können. Diese Kunststoffe können spritzgegossen oder anderweitig über die Schmelze formgebend bearbeitet werden, wobei auch komplexe Formgebungen möglich sind. Dadurch können aus diesen Werkstoffen einfach und kostengünstig Dichtungen hergestellt werden.

Die Rechteckdichtung kann aus Polytetrafluorethylen (PTFE) bestehen. PTFE ist gegenüber einer Vielzahl von Chemikalien beständig und weist einen geringen Reibbeiwert auf. Rechteckdichtungen aus PTFE werden meist aus Halbzeugen, wie beispielsweise Rohren, hergestellt oder können mittels Sintern erzeugt werden. Es ist auch denkbar eine Rechteckdichtung aus einem mit PTFE getränkten Vlies herzustellen. Rechtdichtungen aus einem PTFE-Vlies weisen gegenüber solchen aus reinem PTFE ein verbessertes Kriechverhalten auf und haben eine geringere Extrusionsneigung. Dazu wird ein Halbzeug, beispielsweise ein Rohr, aus einem mit PTFE getränkten Vlies hergestellt, welches in einem anschließenden Sintervorgang wärmebehandelt und abschließend formgebend bearbeitet wird.

Die Rechteckdichtung kann aus einem Elastomer bestehen. Die hydrodynamische Struktur bewirkt ein "Aufschwimmen" der Dichtung, so dass kein Festkörper-Kontakt der Dichtung mehr vorliegt, was zu einer hohen Temperaturbelastung geführt hätte. Daher können die Rechteckdichtungen auch aus preiswerteren elastomeren Werkstoffen, wie NBR oder ACM hergestellt werden. Dichtungen aus elastomeren Werkstoffen können stoßfrei hergestellt werden und sind einfach montierbar.

Die hydrodynamische Struktur kann so ausgebildet sein, dass sie drehrichtungsunabhängig wirksam ist. Dadurch vereinfacht sich die Montage, da Rechteckdichtungen paarweise eingebaut werden und eine Kontrolle der Drehrichtung nachteilig ist.

Die Rechteckdichtung kann einen magnetisierbaren Werkstoff umfassen. Derartige Werkstoffe sind beispielsweise Ferrit-Partikel und werden dem Dichtungswerkstoff vor der Formgebung beigemischt. Durch den magnetischen Werkstoff kann der Dichtung ein magnetisches Muster aufgeprägt werden, welches durch einen Sensor detektiert werden kann.

Die Rechteckdichtung kann mit einem magnetischen Encoder-Muster versehen sein. Dieses Muster kann durch abwechselnd angebrachte Nord- und Südpole gebildet sein und kann durch einen im Gehäuse angebrachten Sensor detektiert werden. Ist die Rechteckdichtung drehfest mit der Welle verbunden kann durch das Encoder-Muster die Drehzahl der Welle bestimmt werden. Es ist aber auch eine Drehzahl-Bestimmung der Dichtung möglich, welche eine Aussage bezüglich der Belastung und Lebensdauer der Dichtung ermöglicht.

Die Rechteckdichtung kann eine geometrische Referenzmarkierung aufweisen. Diese Referenzmarkierung kann durch eine Ausnehmung oder eine Nut gebildet sein. Die Referenzmarkierung ermöglicht eine Positionsbestimmung der Dichtung. Es können auch beide Rechteckdichtungen einer Drehdurchführung mit einer Referenzmarkierung versehen sein. Diese können sich vorteilhafterweise auch voneinander unterscheiden, so dass die Rechteckdichtungen voneinander unterschieden werden können und der jeweiligen Dichtstelle eindeutig zugewiesen werden können.
Die hydrodynamische Struktur kann in dem Formgebungsprozess der Rechteckdichtung erzeugbar sein. Als Formgebungsprozess kommt beispielsweise Spritzgießen und Compression-Molding in Frage. Dabei wird die Formgebung der hydrodynamischen Struktur in den Formgebungsprozess der Dichtung integriert, wodurch sich die Fertigung vereinfacht.

Die Rechteckdichtung kann mit einer Verschleißschutz-Beschichtung oder einer reibungsreduzierenden Beschichtung versehen sein. Derartige Verschleißschutz-Beschichtungen sind beispielsweise Plasmapolymerschichten, Diamond-Like-Carbon-Schichten oder eine Beschichtung mittels einer physikalischen Gasphasenabscheidung (PVD-Beschichtung). Diese Beschichtungen verhindern einen vorzeitigen Verschleiß der Rechteckdichtung.

### Kurzbeschreibung der Zeichnung

Einige Ausführungsbeispiele der erfindungsgemäßen Dichtungsanordnung werden nachfolgend anhand der Figuren näher erläutert. Diese zeigen, jeweils schematisch:
- Fig. 1: eine erfindungsgemäße Dichtungsanordnung in einer Drehdurchführung;
- Fig. 2: mehrere nebeneinander angeordnete Drehdurchführungen;
- Fig. 3: eine hydrodynamische Struktur mit vorgegebener Drehrichtung;
- Fig. 3a: die Dichtung gemäß Figur 3 in der Draufsicht;
- Fig. 4: eine drehrichtungsunabhängige hydrodynamische Struktur;
- Fig. 4a: die Dichtung gemäß Figur 4 in der Draufsicht;
- Fig. 5: eine Dichtung mit einer Anzahl beidseitig angeordneter hydrodynamischer Strukturen;
- Fig. 6: eine Dichtung mit radial versetzt angeordneten hydrodynamischen Strukturen;
- Fig. 7: eine Dichtung mit weiteren hydrodynamischen Strukturen auf der Mantelfläche;
- Fig. 8: eine magnetisierbare Dichtung mit aufgeprägtem Encoder-Muster;
- Fig. 9: eine Dichtung gemäß Figur 9 mit Referenzmarke.

### Ausführung der Erfindung

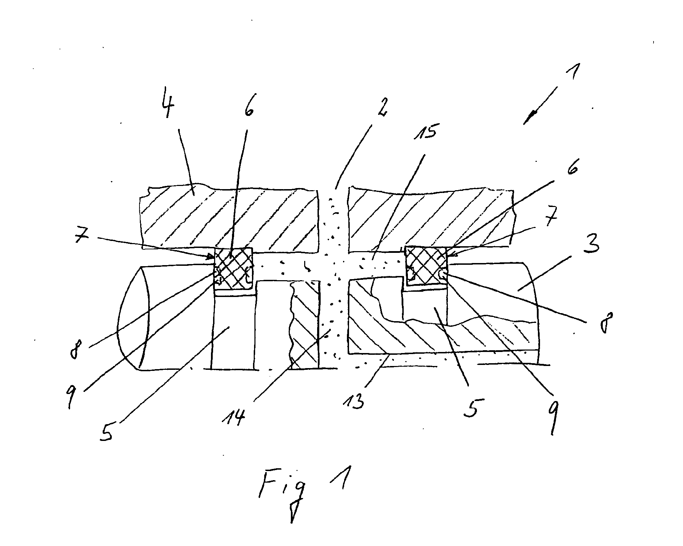

Figur 1 zeigt eine Drehdurchführung, bei der eine Bohrung 13 einer rotierenden Welle 3 mit einem unter Druck stehenden Fluid 2 versorgt wird. Dazu umfasst die Welle 3 eine radiale Bohrung 14 die sich an die Bohrung 13 anschließt und in einem Raum 15 zwischen der Welle 3 und einem Gehäuse 4 mündet. Die Welle 3 umfasst beidseitig der radialen Bohrung 14 jeweils eine Nut 5, in der jeweils eine Rechteckdichtung 6 angeordnet ist, welche den Raum 15 in radialer Richtung begrenzt und abdichtet. Die Rechteckdichtung 6 weist an zumindest einer Begrenzungsfläche 7, in dieser Ausführung an beiden Seitenwänden eine hydrodynamische Struktur 8 in Form zumindest einer Ausnehmung 9 auf. Diese Ausnehmung 9 ist benachbart zu der Wand der Nut 5 und wirkt mit dieser zusammen. Die Breite und die Tiefe der Ausnehmung nimmt in Strömungsrichtung des Fluids 2 betrachtet ab, so dass sich ein Schleppdruck aufbaut, der zu einer Verminderung der Reibung führt. Die Rechteckdichtung 6 besteht aus einem Hochtemperatur-Thermoplast. Die Herstellung erfolgt im Spritzgießverfahren, wobei die Prägung der hydrodynamischen Struktur 8 in den Formgebungsprozess der Rechteckdichtung 6 integriert ist. Mögliche Einsatzgebiete der Drehdurchführung mit der erfindungsgemäßen Dichtungsanordnung 1 sind Automatikgetriebe, Bohreinrichtungen, Nockenwellensteuerungen sowie Walzenkühlungen von Papiermaschinen.

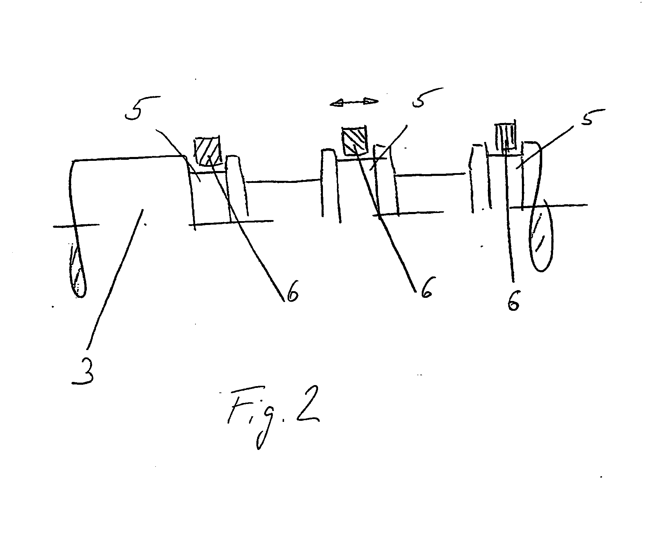

Figur 2 zeigt eine Einrichtung gemäß Figur 1 mit zwei benachbart zueinander angeordneten Drehdurchführungen. Hierbei ist die mittig angeordnete Rechteckdichtung 6 in Abhängigkeit der Drücke in den benachbarten Räumen wechselnd belastet, so dass sich die Rechteckdichtung 6 wechselnd an beide Seitenwände der Nut 5 anlegen kann. Daher weist zumindest die mittig angeordnete Rechteckdichtung 6 an beiden Seitenwänden 7 die hydrodynamische Struktur auf.

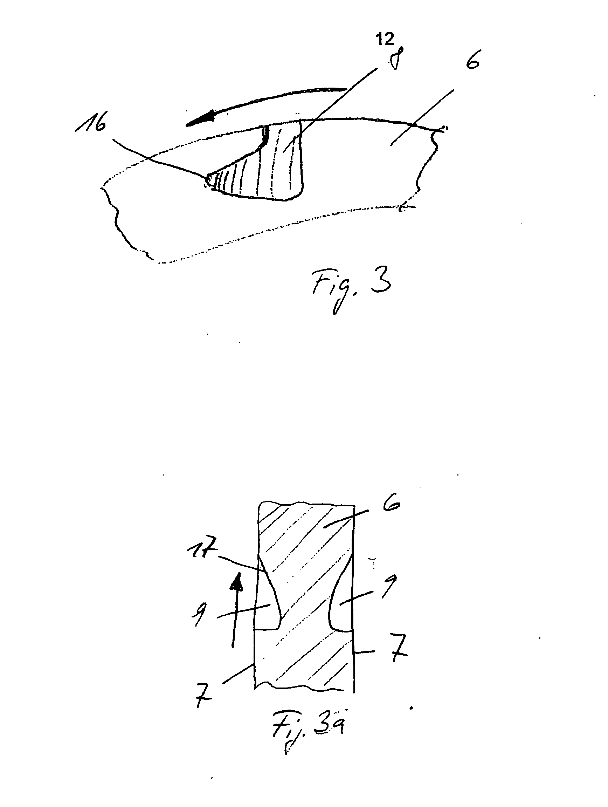

Figur 3 zeigt im Detail eine Ausnehmung 9 einer hydrodynamischen Struktur 8. Die Ausnehmung 9 ist in Richtung der Mantelfläche geöffnet, um das Zuströmen des Fluids 2 in die Ausnehmung 9 zu erleichtern. Die Ausnehmung 9 ist keilförmig ausgebildet und dadurch so gestaltet, dass die Breite der Ausnehmung 9, in Strömungsrichtung des Fluids 2 (Pfeil) betrachtet, abnimmt. Die Ausnehmung 9 läuft in eine Spitze 16 aus.

Figur 3a zeigt die Ausnehmungen gemäß Figuren 3 in der Draufsicht. Es ist zu erkennen, dass die Tiefe ebenfalls in Strömungsrichtung des Fluids 2 (Pfeil) betrachtet abnimmt. Des Weiteren ist zu erkennen, dass die die hydrodynamische Struktur 8 bildenden Ausnehmungen 9 an beiden Seitenwänden 7 angeordnet sind. Der Grund 17 der Ausnehmung 9 verläuft unter einem Winkel von 5° zur Seitenwand 7.

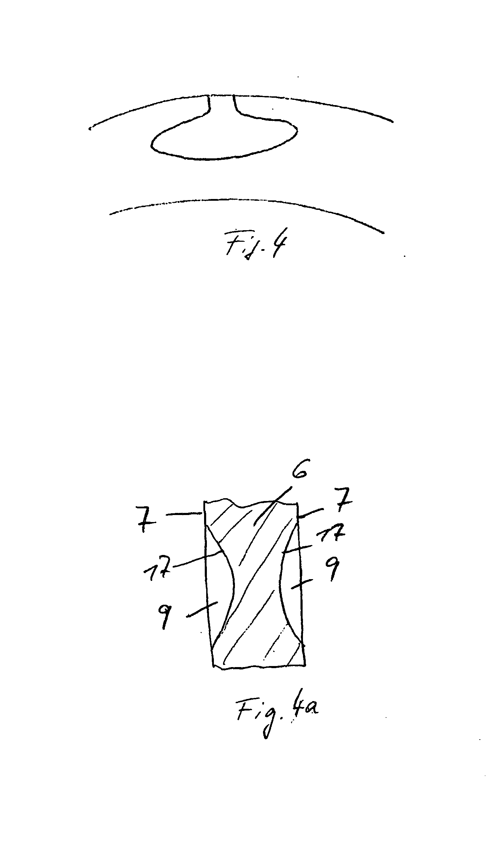

Figur 4 zeigt im Detail eine andere Ausgestaltung einer Ausnehmung 9 einer hydrodynamischen Struktur 8. Die Ausnehmung 9 ist ebenfalls in Richtung der Mantelfläche geöffnet, um das Zuströmen des Fluids 2 in die Ausnehmung 9 zu erleichtern. Die Ausnehmung 9 ist so gestaltet, dass die Breite der Ausnehmung 9 in Umfangsrichtung beidseitig abnimmt und jeweils in eine Spitze 16 ausläuft. Bei dieser Ausgestaltung ist die hydrodynamische Struktur 8 drehrichtungsunabhängig.

Figur 4a zeigt die Ausnehmungen 9 gemäß der Figuren 4 in der Draufsicht. Es ist zu erkennen, dass die Tiefe wie auch die Breite in Umfangsrichtung beidseitig abnimmt. Des Weiteren ist zu erkennen, dass die die hydrodynamische Struktur 8 bildenden Ausnehmungen 9 an beiden Seitenwänden 7angeordnet sind. Der Grund 17 der Ausnehmung 9 verläuft hier ebenfalls unter einem Winkel von 5° zur Seitenwand 7.

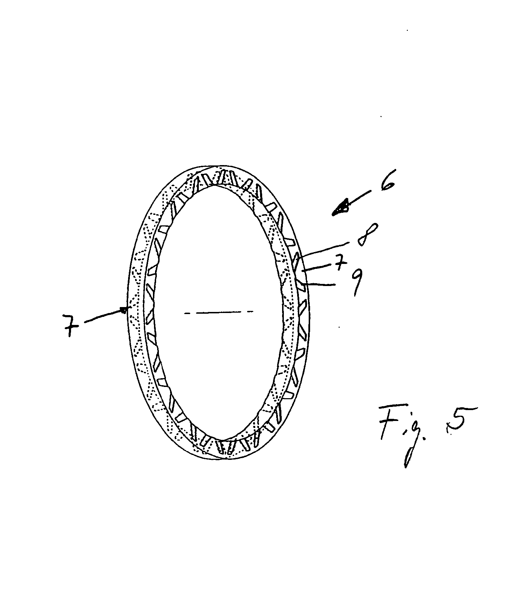

Figur 5 zeigt eine Rechteckdichtung 6 mit beidseitig angebrachten hydrodynamischen Strukturen 8. Die Breite und die Tiefe der Ausnehmung verlaufen wie zuvor beschrieben.

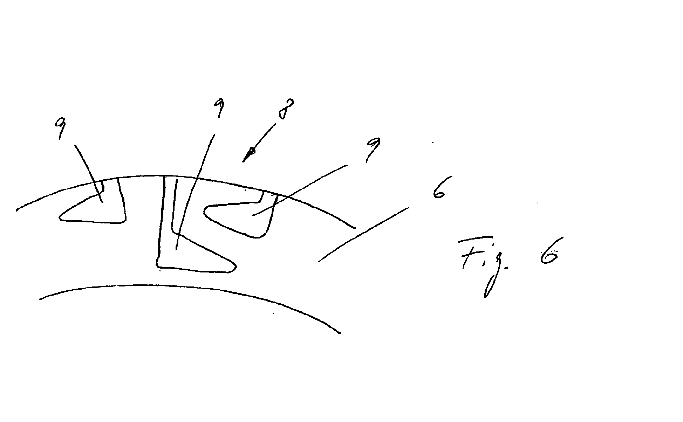

Figur 6 zeigt eine Rechteckdichtung 6 mit einer hydrodynamischen Struktur 8 gemäß Figur 3. Die dort beschriebenen Ausnehmungen 9 der hydrodynamischen Struktur 8 sind drehrichtungsabhängig. Daher werden in dieser Ausführung Ausnehmungen 9 vorgesehen, die alternierend in Umfangsrichtung weisen. Die Ausnehmungen 9 sind radial versetzt, so dass die in die eine Umfangsrichtung weisenden Ausnehmungen 9 in einer Radialebene angeordnet sind und die in die andere Umfangsrichtung weisenden Ausnehmungen 9 in einer anderen Radialebene angeordnet sind. Dadurch ergibt sich ebenfalls eine Drehrichtungsunabhängigkeit der Rechteckdichtung 6

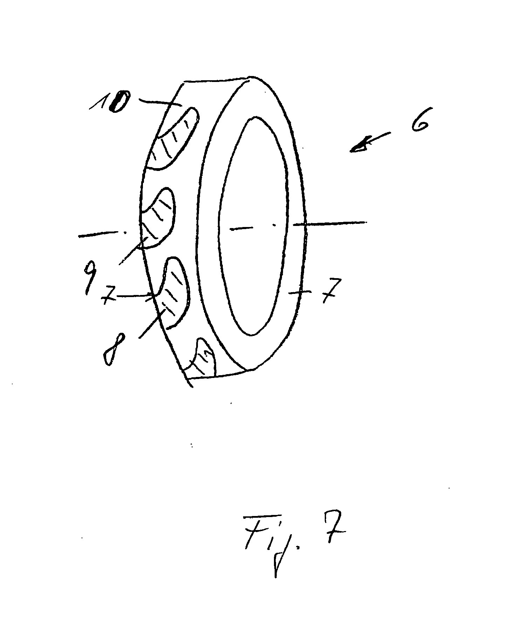

Figur 7 zeigt eine Rechteckdichtung 6 bei der eine weitere hydrodynamischen Struktur 8 an der Mantelfläche 10 der Rechteckdichtung 6 angeordnet ist. Sie wird dann kombiniert mit hydrodynamischen Strukturen 8 an den Seitenflächen 7.

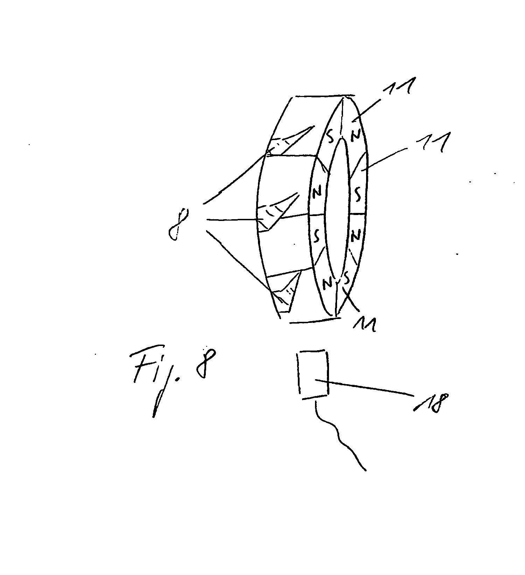

Figur 8 zeigt eine Rechteckdichtung 6 mit einer hydrodynamischen Struktur 8 gemäß einer der vorherigen Figuren. Die Rechteckdichtung 6 gemäß dieser Figur umfasst einen magnetisierbaren Werkstoff und ist mit einem magnetischen Encoder-Muster 11 versehen, welches durch einen Sensor 18 detektiert werden kann.

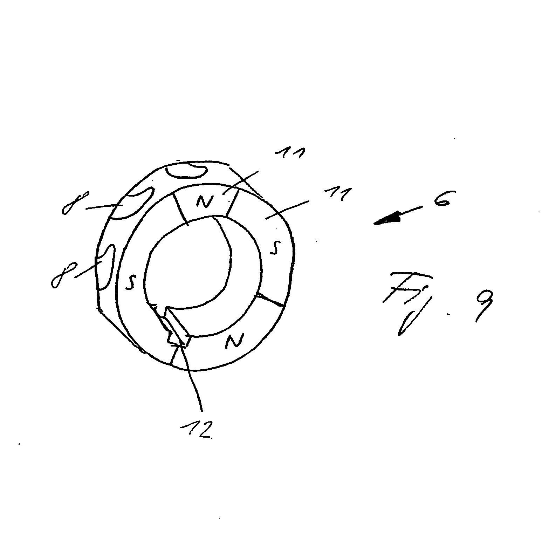

Figur 9 zeigt eine Rechteckdichtung 6 gemäß Figur 8 die ferner eine geometrische Referenzmarkierung 12 aufweist.

## Patentansprüche

1. Dichtungsanordnung (1) zur Abdichtung einer Drehdurchführung für Fluide (2) zwischen einer Welle (3) und einem Gehäuse (4), umfassend die Welle (3) und eine Rechteckdichtung (6), wobei die Welle (3) zumindest eine Nut (5) umfasst, in der die Rechteckdichtung (6) angeordnet ist, wobei die Rechteckdichtung (6) an zumindest einer Begrenzungsfläche (7,10) eine hydrodynamische Struktur (8) in Form zumindest einer Ausnehmung (9) aufweist, die zur Wand der Nut (5) benachbart ist und mit dieser zusammenwirkt,
**dadurch gekennzeichnet, dass**
die Breite und Tiefe der Ausnehmung (9), in Strömungsrichtung des Fluids (2) betrachtet, abnimmt, wobei sich die Tiefe und die Breite der Ausnehmung (9) unter einem Winkel verjüngt, wobei die Ausnehmung (9) in Richtung der Mantelfläche der Rechteckdichtung (6) geöffnet ist, wobei die Ausnehmung (9) in einer Spitze ausläuft.

2. Dichtungsanordnung nach Anspruch 1, **dadurch gekennzeichnet, dass** die hydrodynamische Struktur (8) an beiden Seitenwänden (7) der Rechteckdichtung (6) angeordnet ist.

3. Dichtungsanordnung nach einem der Ansprüche 1 bis 2, **dadurch gekennzeichnet, dass** eine weitere hydrodynamische Struktur (8) an der Mantelfläche (10) der Rechteckdichtung (6) angeordnet ist.

4. Dichtungsanordnung nach einem der Ansprüche 1 bis 3, **dadurch gekennzeichnet**, die Ausnehmung (9) keilförmig oder konisch ausgebildet ist,

5. Dichtungsanordnung nach einem der Ansprüche 1 bis 4, **dadurch gekennzeichnet, dass** sich die Tiefe und/oder die Breite der Ausnehmung (9) unter einem Winkel von 0,5 bis 10° verjüngt.

6. Dichtungsanordnung nach einem der Ansprüche 1 bis 5, **dadurch gekennzeichnet, dass** die Rechteckdichtung (6) aus einem Hochtemperatur-Thermoplast besteht.

7. Dichtungsanordnung nach einem der Anspruche 1 bis 5, **dadurch gekennzeichnet, dass** die Rechteckdichtung (6) aus PTFE besteht.

8. Dichtungsanordnung nach einem der Ansprüche 1 bis 5, **dadurch gekennzeichnet, dass** die Rechteckdichtung (6) aus einem Elastomer besteht.

9. Dichtungsanordnung nach einem der Ansprüche 1 bis 8, **dadurch gekennzeichnet, dass** die Rechteckdichtung (6) aus einem magnetisierbaren Werkstoff besteht.

10. Dichtungsanordnung nach Anspruch 9, **dadurch gekennzeichnet, dass** die Rechteckdichtung (6) mit einem magnetischen Encoder-Muster (11) versehen ist.

11. Dichtungsanordnung nach einem der Ansprüche 1 bis 10, **dadurch gekennzeichnet, dass** die Rechteckdichtung (6) eine geometrische Referenzmarkierung (12) aufweist.

12. Dichtungsanordnung nach einem der Ansprüche 1 bis 11, **dadurch gekennzeichnet, dass** die hydrodynamische Struktur (8) in dem Formgebungsprozess der Rechteckdichtung (6) erzeugt.

13. Dichtungsanordnung nach einem der Ansprüche 1 bis 12, **dadurch gekennzeichnet, dass** die Rechteckdichtung (6) mit einer Verschleißschutz-Beschichtung versehen ist.

14. Dichtungsanordnung nach einem der Ansprüche 1 bis 13, **dadurch gekennzeichnet, dass** die Rechteckdichtung (6) mit einer reibungsreduzierenden Beschichtung versehen ist.

## Claims

1. Seal arrangement (1) for sealing off a rotary leadthrough for fluids (2) between a shaft (3) and a housing (4), comprising the shaft (3) and a rectangular seal (6), the shaft (3) comprising at least one groove (5) in which the rectangular seal (6) is arranged, the rectangular seal (6) having, on at least one boundary surface (7, 10), a hydrodynamic structure (8) in the form of at least one recess (9) which is adjacent to the wall of the groove (5) and which cooperates with this, **characterized in that** the width and the depth of the recess (9) decrease, as seen in the direction of flow of the fluid (2), the depth and the width of the recess (9) tapering at an angle, the recess (9) being open in the direction of the surface area of the rectangular seal (6), and the recess (9) running out in a point.

2. Seal arrangement according to Claim 1, **characterized in that** the hydrodynamic structure (8) is arranged on both side walls (7) of the rectangular seal (6).

3. Seal arrangement according to either one of Claims 1 and 2, **characterized in that** a further hydrodynamic structure (8) is arranged on the surface area (10) of the rectangular seal (6).

4. Seal arrangement according to one of Claims 1 to 3, **characterized in that** the recess (9) is of wedge-shaped or conical form.

5. Seal arrangement according to one of Claims 1 to 4, **characterized in that** the depth and/or the width of the recess (9) taper/tapers at an angle of 0.5 to 10°.

6. Seal arrangement according to one of Claims 1 to 5, **characterized in that** the rectangular seal (6) consists of a high-temperature thermoplastic.

7. Seal arrangement according to one of Claims 1 to 5, **characterized in that** the rectangular seal (6) consists of PTFE.

8. Seal arrangement according to one of Claims 1 to 5, **characterized in that** the rectangular seal (6) consists of an elastomer.

9. Seal arrangement according to one of Claims 1 to 8, **characterized in that** the rectangular seal (6) consists of a magnetizable material.

10. Seal arrangement according to Claim 9, **characterized in that** the rectangular seal (6) is provided with a magnetic encoder pattern (11).

11. Seal arrangement according to one of Claims 1 to 10, **characterized in that** the rectangular seal (6) has a geometric reference marking (12).

12. Seal arrangement according to one of Claims 1 to 11, **characterized in that** the hydrodynamic structure (8) is generated in the process of shaping the rectangular seal (6).

13. Seal arrangement according to one of Claims 1 to 12, **characterized in that** the rectangular seal (6) is provided with an anti-wear coating.

14. Seal arrangement according to one of Claims 1 to 13, **characterized in that** the rectangular seal (6) is provided with a friction-reducing coating.

## Revendications

1. Dispositif d'étanchéité (1) servant à étanchéifier un passage pivotant pour les fluides (2) entre un arbre (3) et un carter (4), comprenant l'arbre (3) et un joint rectangulaire (6), l'arbre (3) comprenant au moins une rainure (5) dans laquelle le joint rectangulaire (6) est disposé, le joint rectangulaire (6) comportant au niveau d'au moins une surface de délimitation (7, 10) une structure hydrodynamique (8) prenant la forme d'au moins un évidement (9) placé à proximité de la paroi de la rainure (5) et interagissant avec elle, **caractérisé en ce que** la largeur et la profondeur de l'évidement (9), vues en direction de l'écoulement du fluide (2), rétrécissent, la profondeur et la largeur de l'évidement (9) s'effilant selon un certain angle, l'évidement (9) étant ouvert en direction de la surface d'enveloppe du joint rectangulaire (6), l'évidement (9) se terminant en pointe.

2. Dispositif d'étanchéité selon la revendication 1, **caractérisé en ce que** la structure hydrodynamique (8) est disposée au niveau des deux parois latérales (7) du joint rectangulaire (6).

3. Dispositif d'étanchéité selon l'une quelconque des revendications 1 à 2, **caractérisé en ce qu'**une structure hydrodynamique (8) supplémentaire est disposée au niveau de la surface d'enveloppe (10) du joint rectangulaire (6).

4. Dispositif d'étanchéité selon l'une quelconque des revendications 1 à 3, **caractérisé en ce que** l'évidement (9) prend une forme de clavette ou de cône.

5. Dispositif d'étanchéité selon l'une quelconque des revendications 1 à 4, **caractérisé en ce que** la profondeur et/ou la largeur de l'évidement (9) se rétrécit selon un angle allant de 0,5 à 10°.

6. Dispositif d'étanchéité selon l'une quelconque des revendications 1 à 5, **caractérisé en ce que** le joint rectangulaire (6) se compose d'un thermoplastique à haute température.

7. Dispositif d'étanchéité selon l'une quelconque des revendications 1 à 5, **caractérisé en ce que** le joint rectangulaire (6) est en PTFE.

8. Dispositif d'étanchéité selon l'une quelconque des revendications 1 à 5, **caractérisé en ce que** le joint rectangulaire (6) est en élastomère.

9. Dispositif d'étanchéité selon l'une quelconque des revendications 1 à 8, **caractérisé en ce que** le joint rectangulaire (6) est fabriqué à partir d'un matériau magnétisable.

10. Dispositif d'étanchéité selon la revendication 9, **caractérisé en ce que** le joint rectangulaire (6) est pourvu d'un modèle de codeur magnétique (11).

11. Dispositif d'étanchéité selon l'une quelconque des revendications 1 à 10, **caractérisé en ce que** le joint rectangulaire (6) comporte un marquage référentiel (12) géométrique.

12. Dispositif d'étanchéité selon l'une quelconque des revendications 1 à 11, **caractérisé en ce que** la structure hydrodynamique (8) est réalisée au cours du processus de moulage du joint rectangulaire (6).

13. Dispositif d'étanchéité selon l'une quelconque des revendications 1 à 12, **caractérisé en ce que** le joint rectangulaire (6) est pourvu d'un revêtement anti-usure.

14. Dispositif d'étanchéité selon l'une quelconque des revendications 1 à 13, **caractérisé en ce que** le joint rectangulaire (6) est pourvu d'un revêtement conçu pour réduire les frottements.
